# FASCICULE DE BREVET EUROPEEN

(11) **EP 1 859 428 B1**
(45) Date de publication et mention de la délivrance du brevet: **27.01.2010**
(21) Numéro de dépôt: 06725998.6
(22) Date de dépôt: 01.03.2006
(51) Int. Cl.: G08G 5/04, G05D 1/06

(54) **PROCEDE ET SYSTEME D'EVITEMENT DE TERRAIN POUR UN AERONEF**
GELÄNDEAUSWEICHVERFAHREN UND -SYSTEM FÜR EIN FLUGZEUG
TERRAIN AVOIDANCE METHOD AND SYSTEM FOR AN AIRCRAFT

(30) Priorité: 17.03.2005 FR 0502654
(43) Date de publication de la demande: 28.11.2007
(73) Titulaire: AIRBUS OPERATIONS (SAS), 31060 Toulouse (FR)
(72) Inventeur: JOURDAN, Christophe, F-31400 Toulouse (FR); FABRE, Pierre, F-31000 Toulouse (FR); WALTER, Stéphane, F-31490 Brax (FR); LACAZE, Isabelle, F-31770 Colomiers (FR)
(74) Mandataire: Hauer, Bernard
(86) Numéro de dépôt international: PCT/FR2006/000457
(87) Numéro de publication internationale: WO 2006/097592

(56) Documents cités:
- GB-A- 2 310 184
- US-A- 3 188 632
- US-A- 5 442 556
- US-A- 6 088 654
- US-B1- 6 480 120

## Description

La présente invention concerne un procédé et un système d'évitement de terrain pour un aéronef.

On sait que de nombreux aéronefs, notamment des avions de transport civil, sont équipés d'un dispositif d'alerte de collision permettant d'émettre un signal d'alerte en cas de risque de collision de l'aéronef avec le terrain. Concernant le dispositif d'alerte de collision, il peut s'agir notamment d'un dispositif de type TAWS ("Terrain Awareness and Warning System" en anglais, c'est-à-dire "système d'alerte et de prise de conscience du terrain" en français), notamment de type EGPWS ("Enhanced Ground Proximity Warning System" en anglais, c'est-à-dire "système amélioré d'alerte de proximité du sol" en français) ou de type GCAS ("Ground Collision Avoidance System" en anglais, c'est-à-dire "système d'évitement de collision avec le sol" en français).

Lorsqu'un tel dispositif d'alerte de collision émet un signal d'alerte, il revient en général au pilote de tout mettre en oeuvre, en particulier en pilotant manuellement l'aéronef, pour éviter une collision avec le terrain.

Le brevet US-6088654 concerne un dispositif et un procédé d'anti-collision.Il prévoit de calculer deux trajectoires TPA et TPB, dont l'une TPA est destinée a une pré-alarme usuelle d'un système d'anti-collision, de type "caution" et dont l'autre est destinée a une alarme usuelle de type "warning"; de comparer ces trajectoires TPA et TPB avec le terrain survolé; et d'émettre une alerte, de type "caution" ou de type "warning", si l'une de ces trajectoires risque d'entrer en collision avec le relief du terrain survolé.

Le brevet US-5442556 concerne un système pour engendrer un signal d'alarme lors de la détection d'un risque de collision avec le terrain survolé. Il décrit la possibilité de déterminer une pluralité de trajectoires d'évitement présentant des variations de cap entre elles. Ces trajectoires d'évitement sont déterminées à partir des vitesse et accélération courantes de l'aéronef.

Le brevet US-4 924 401 propose une solution visant à éviter, de façon automatique, une collision de l'aéronef avec le terrain. Cette solution consiste à définir une altitude minimale au-dessous de laquelle l'aéronef ne doit pas descendre et à piloter automatiquement l'aéronef au moyen du pilote automatique, lorsque cette altitude minimale est franchie en descente, de façon à commander alors automatiquement une remontée de l'aéronef et à empêcher ainsi toute collision avec le terrain.

Toutefois, cette solution connue est surtout adaptée au cas où le pilote est inconscient alors que l'aéronef vole en piqué. De ce fait, elle présente l'inconvénient d'agir très tardivement sur la trajectoire de l'aéro-nef, et l'action sur cette trajectoire est bien entendu d'autant plus importante qu'elle est tardive. Aussi, appliquée à un avion de transport gros porteur par exemple, cette solution connue provoque une situation d'inconfort, voire de danger potentiel pour les passagers. De plus, le risque que l'action sur la trajectoire ne permette pas de protéger l'aéronef d'une collision avec le terrain, est lui aussi élevé, en raison de cette action tardive.

La présente invention a pour objet de remédier à ces inconvénients. Elle concerne un procédé d'évitement de terrain pour un aéronef, qui est particulièrement efficace.

A cet effet, selon l'invention, ledit procédé selon lequel on utilise un dispositif d'alerte de collision qui surveille le vol de l'aéronef par rapport au terrain environnant et qui est susceptible d'émettre un signal d'alerte, lorsque l'aéronef risque une collision avec un relief du terrain en maintenant ses caractéristiques de vol actuelles, procédé selon lequel, lorsque ledit dispositif d'alerte de collision émet un signal d'alerte, automatiquement :
B/ on vérifie si un premier gain de hauteur qui est obtenu au niveau dudit relief par l'aéronef en lui appliquant un ordre de montée avec un ordre de maintien du cap courant, est suffisant pour franchir ledit relief ; et
C/ en fonction de cette vérification, si ledit premier gain de hauteur est insuffisant pour franchir ledit relief, on recherche s'il existe au moins une valeur de variation de cap pour laquelle un second gain de hauteur qui est obtenu au niveau du relief par l'aéronef en lui appliquant un ordre de montée est suffisant pour franchir ledit relief est caractérisé en ce que :
   - à une étape A/ antérieure, on détermine, comme ordre de montée, un ordre de montée à pente optimale pour l'aéronef qui est utilisé aux étapes B/ et C ; et
   - à l'étape C/ :
      a) si ledit premier gain de hauteur est suffisant pour franchir ledit relief on applique automatiquement à l'aéronef ledit ordre de montée à pente optimale avec un ordre de maintien du cap courant : et
      b) si ledit premier gain de hauteur est insuffisant pour franchir ledit relief, et s'il existe de plus au moins une valeur de variation de cap, pour laquelle un second gain de hauteur qui est obtenu au niveau du relief par l'aéronef en lui appliquant un ordre de montée à pente optimale, est suffisant pour franchir ledit relief ;
      α) on sélectionne automatiquement l'une desdites valeurs de variation de cap permettant de franchir le relief ; et
      β) on applique automatiquement à l'aéronef un ordre de montée particulier qui est suffisant pour franchir le relief avec un ordre de cap qui correspond à la valeur de variation de cap ainsi sélectionnée.

Le procédé conforme à l'invention présente l'avantage d'agir sur la trajectoire de l'aéronef, dès qu'un risque de collision avec le relief du terrain a été détecté, et cette action est réalisée automatiquement, c'est-à-dire sans intervention du pilote. Ainsi, dès l'émission d'un signal d'alerte, on agit automatiquement de façon à améliorer la situation de l'aéronef par rapport au terrain, en lui appliquant un ordre de montée, généralement un ordre de montée à pente optimale (relativement aux performances de l'aéronef) comme précisé ci-dessous.

Pour ce faire, selon l'invention :
- si une telle action est suffisante pour franchir le relief, on applique simplement un ordre de montée à pente optimale à l'aéronef sans modifier son cap, ce qui permet de réaliser une manoeuvre d'évitement simplifiée ; et
- si la manoeuvre simplifiée précédente n'est pas suffisante pour franchir le relief, ce qui peut survenir dans certaines circonstances (relief très élevé, ...), on modifie le cap de l'aéronef pour le diriger dans une direction où le relief n'est pas trop élevé, et on lui applique alors (simplement) un ordre de montée particulier qui est suffisant pour franchir le relief dans cette direction.

Ainsi, grâce à l'invention, on est en principe en mesure de franchir tout relief qui est situé à l'avant de l'aéronef.

Dans le cadre de la présente invention :
- on entend par pente, aussi bien la pente proprement dite que l'angle d'assiette de l'aéronef ; et
- on entend par cap, aussi bien le cap proprement dit que la route de l'aéronef.

En outre, dans le cadre de la présente invention, l'ordre de montée à pente optimale est déterminé en tenant compte d'un ordre de poussée associé de façon à pouvoir maximiser la pente. La pente maximale correspondant à la poussée courante de l'aéronef n'étant pas forcément la plus élevée, on détermine un ordre de poussée pour lequel la pente maximale est la plus élevée possible.

Dans un premier mode de réalisation simplifié, ledit ordre de montée particulier que l'on applique à l'aéronef à l'étape C.b.β, correspond à un ordre de montée à pente optimale.

Dans un second mode de réalisation, on détermine, comme ordre de montée particulier un ordre de montée (à pente non maximale) engendrant un gain de hauteur au niveau du relief qui correspond à un gain de hauteur à la fois nécessaire et suffisant pour franchir ledit relief. Dans ce second mode de réalisation, de préférence, on commence par déterminer une valeur de cap (ou de route) permettant de minimiser l'écart de route de l'aéronef, puis on détermine un ordre de montée (à pente non maximale) permettant de franchir le relief tout en minimisant l'écart de pente (confort des passagers). Ce second mode de réalisation permet donc d'améliorer le confort des passagers (en raison d'une pente moindre et d'une accélération moindre) sans être préjudiciable à la sécurité de l'aéronef, puisque le gain de hauteur est suffisant pour franchir le relief. Bien entendu, ce second mode de réalisation s'applique uniquement au cas où le gain de hauteur nécessaire pour franchir le relief est inférieur au gain de hauteur obtenu en appliquant à l'aéronef un ordre de montée à pente optimale, puisque sinon on applique ce dernier ordre de montée.

Par ailleurs, l'ordre de montée particulier suffisant pour franchir le relief est calculé, de préférence, en tenant compte d'une marge de hauteur par rapport à ce relief (marge de sécurité).

Par ailleurs, de préférence, à l'étape C.b.α, on sélectionne (parmi toutes les valeurs de variation de cap trouvées) la valeur de variation de cap la plus petite en valeur absolue, ce qui permet d'écarter l'aéronef le moins possible de son cap courant, c'est-à-dire de la trajectoire latérale initialement prévue.

Bien entendu, dans le cadre de la présente invention, on peut envisager d'autres variantes de sélection de la valeur de variation de cap, mises en oeuvre à l'étape C.b.α. En particulier :
- dans une première variante, on sélectionne la valeur de variation de cap qui correspond au relief le moins élevé et qui est située dans un intervalle de variation de cap prédéterminé, défini de part et d'autre du cap courant de l'aéronef ;
- dans une seconde variante, on sélectionne la valeur de variation de cap, pour laquelle l'angle de roulis nécessaire au changement de cap correspondant est, en valeur absolue, inférieur à une valeur prédéterminée, par exemple à 45°, afin de ne pas trop dégrader les performances de montée de l'aéronef (pente maximale possible).
   Dans un mode de réalisation particulier, à l'étape C.b.β, on applique d'abord ledit ordre de montée particulier, puis on applique ledit ordre de cap engendrant un changement de cap. Ceci permet d'anticiper le plus possible l'ordre de montée et donc de maximiser le gain de hauteur obtenu au niveau du relief.

En outre, dans un mode de réalisation particulier, lorsque ledit dispositif d'alerte de collision émet un signal d'alerte, on modifie la configuration aérodynamique de l'aéronef de manière à augmenter le gain de hauteur au niveau du relief, et on détermine, à l'étape A, un ordre de montée à pente optimale, en tenant compte de la nouvelle configuration aérodynamique de l'aéronef (résultant de cette modification). Ce mode de réalisation particulier permet d'augmenter le gain de hauteur obtenu au niveau du relief. Ce mode de réalisation peut notamment être appliqué sur un avion lors d'une approche d'un aéroport, pour laquelle les trains d'atterrissage sont sortis, de même que les becs, les volets et/ou les spoilers. Dans ce cas, la modification de la configuration aérodynamique consiste parfois simplement à rentrer ces différents éléments pour obtenir une meilleure pente de montée. Toutefois, dans certaines situations, il est plus intéressant de laisser certains éléments au moins partiellement sortis (notamment des becs ou volets). En fait, on modifie la configuration aérodynamique de l'aéronef de façon à optimiser les performances de montée de l'aéronef. La modification de la configuration aérodynamique peut être réalisée soit automatiquement, soit par le pilote (par procédure).

De façon avantageuse, lorsque l'on applique à l'étape C.b.β un ordre de cap engendrant une variation de cap, on émet dans le poste de pilotage de l'aéronef un signal d'indication pour signaler à un pilote l'application de cet ordre (de variation de cap). A cet effet, on peut indiquer au pilote ledit ordre de variation de cap, mais également l'ordre de montée ainsi que l'engagement de la fonction d'évitement de terrain.

Par ailleurs, de préférence, lors de la disparition d'un risque de collision, on ramène l'aéronef dans une enveloppe de vol opérationnelle.

La présente invention concerne également un système d'évitement de terrain pour un aéronef.

Selon l'invention, ledit système du type comportant :
- un dispositif d'alerte de collision qui surveille le vol de l'aéronef par rapport au terrain environnant et qui est susceptible d'émettre un signal d'alerte lorsque l'aéronef risque une collision avec un relief du terrain s'il maintient ses caractéristiques de vol actuelles ; et
- un dispositif de pilotage automatique de l'aéronef, comprenant au moins :
   - un moyen pour vérifier si un premier gain de hauteur qui est obtenu au niveau dudit relief par l'aéronef, en lui appliquant un ordre de montée avec un maintien du cap courant, est suffisant pour franchir ledit relief; et
   - un moyen pour rechercher, lorsque ledit premier gain dé hauteur est insuffisant pour franchir le relief, s'il existe au moins une valeur de variation de cap pour laquelle un second gain de hauteur qui est obtenu au niveau du relief par l'aéronef en lui appliquant un ordre de montée, est suffisant pour franchir ledit relief, est caractérisé en ce que ledit dispositif de pilotage automatique comprend de plus :

- un moyen pour déterminer, comme ordre de montée, un ordre de montée à pente optimale pour l'aéronef;
- un moyen pour sélectionner automatiquement, le cas échéant, l'une desdites valeurs de variation de cap permettant de franchir le relief; et
- un moyen pour appliquer automatiquement à l'aéronef un ordre de montée et un ordre de cap, à savoir :
   - si ledit premier gain de hauteur est suffisant pour franchir ledit relief, ledit ordre de montée à pente optimale avec un ordre de maintien du cap courant ; et
   - si ledit premier gain de hauteur est insuffisant pour franchir ledit relief, un ordre de montée particulier qui est suffisant pour franchir le relief avec un ordre de cap qui correspond à la valeur de variation de cap sélectionnée.

Dans un mode de réalisation particulier, ledit système d'évitement comporte de plus :
- un moyen d'indication signalant automatiquement l'application d'un ordre de cap engendrant une variation de cap, c'est-à-dire entraînant un évitement latéral du relief ; et/ou
- un moyen pour optimiser la configuration aérodynamique.

En outre, avantageusement, ledit système d'évitement comporte, de plus, un moyen permettant à un pilote de le désengager. Dans ce cas, ledit système d'évitement peut indiquer au pilote comment effectuer les variations de hauteur et de cap nécessaires pour éviter le relief (par exemple au moyen d'un directeur de vol qui indiquerait l'assiette et le cap à prendre).

Par ailleurs, de façon avantageuse, ledit dispositif de pilotage automatique fait partie d'un pilote automatique de l'aéronef.

Les figures du dessin annexé feront bien comprendre comment l'invention peut être réalisée. Sur ces figures, des références identiques désignent des éléments semblables.

La figure 1 est le schéma synoptique d'un système conforme à l'invention.

Les figures 2 à 4 montrent schématiquement différentes situations de vol permettant de bien expliquer les caractéristiques essentielles d'un système conforme à l'invention.

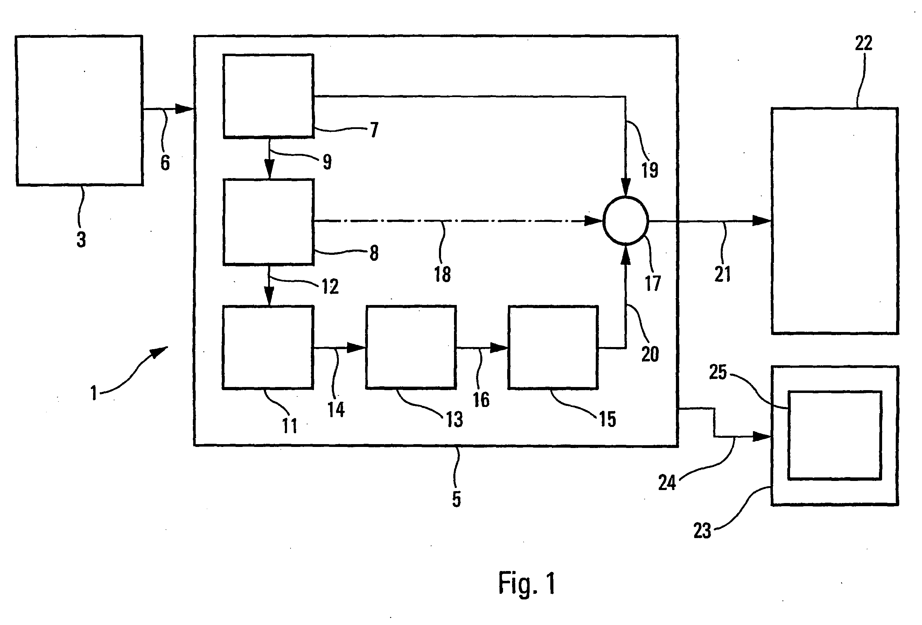

Le système 1 conforme à l'invention et représenté schématiquement sur la figure 1 est un système d'évitement du terrain 2, pour un aéronef A, en particulier un avion de transport gros porteur.

Pour ce faire, ledit système 1 est du type comportant :
- un dispositif d'alerte de collision 3 usuel, qui surveille le vol de l'aéronef A par rapport au terrain 2 environnant et qui est susceptible d'émettre un signal d'alerte lorsque l'aéronef A risque une collision avec un relief 4 dudit terrain 2 s'il maintient ses caractéristiques de vol (vitesse, pente, ...) actuelles ; et
- un dispositif de pilotage automatique 5 de l'aéronef A, qui est relié par une liaison 6 audit dispositif d'alerte de collision 3.

Concernant ledit dispositif d'alerte de collision 3, il peut s'agir notamment d'un dispositif de type TAWS ("Terrain Awareness and Warning System" en anglais, c'est-à-dire "système d'alerte et de prise de conscience du terrain" en français), notamment de type EGPWS ("Enhanced Ground Proximity Warning System" en anglais, c'est-à-dire "système amélioré d'alerte de proximité du sol" en français) ou de type GCAS ("Ground Collision Avoidance System" en anglais, c'est-à-dire "système d'évitement de collision avec le sol" en français).

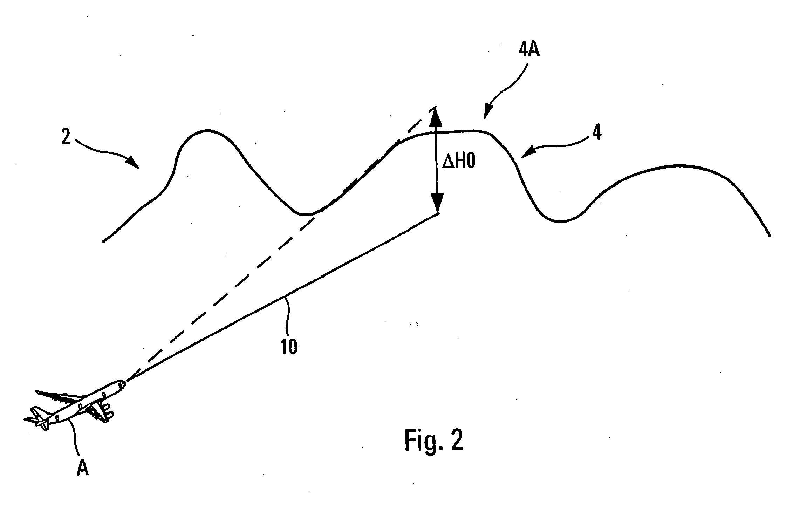

Selon l'invention, ledit dispositif de pilotage automatique 5 comprend au moins les moyens suivants, qui sont en particulier rendus actifs lorsque ledit dispositif d'alerte de collision 3 émet un signal d'alerte :
- un moyen 7 pour déterminer, de façon usuelle, un ordre de montée à pente optimale pour l'aéronef A, relativement aux performances effectives dudit aéronef A ;
- un moyen 8 qui est relié par une liaison 9 audit moyen 7, pour vérifier si un premier gain de hauteur ΔHO (qui est obtenu au niveau du relief 4 par l'aéronef A, lorsqu'on lui applique ledit ordre de montée à pente optimale déterminé par ledit moyen 7, simultanément avec un ordre de maintien du cap courant illustré par une ligne 10 sur les figure 2 à 4) est suffisant pour franchir ledit relief 4 (par exemple une crête 4A dans la situation de la figure 2) ;
- un moyen 11 qui est reliée par une liaison 12 audit moyen 8 pour rechercher, lorsque ledit gain de hauteur ΔHO est insuffisant pour franchir ledit relief 4, s'il existe au moins une valeur de variation de cap ΔCi, i étant un entier supérieur ou égal à 1, pour laquelle un gain de hauteur ΔHi correspondant (qui est obtenu au niveau du relief 4 par l'aéronef A, lorsqu'on lui applique un ordre de montée à pente optimale) est suffisant pour franchir ledit relief 4 ;
- un moyen 13 qui est relié par une liaison 14 audit moyen 11, pour sélectionner de la manière précisée ci-dessous, parmi les différentes valeurs de variation de cap ΔCi trouvées par ledit moyen 11, l'une de ces valeurs de variation de cap. Bien entendu, lorsque le moyen 11 trouve uniquement une seule valeur de variation de cap possible, ledit moyen 13 sélectionne cette valeur unique ;
- un moyen 15 qui est relié par une liaison 16 audit moyen 13, pour déterminer un ordre de montée particulier précisé ci-dessous, ainsi qu'un ordre de cap qui permet de faire changer de cap à l'aéronef A conformément à la valeur de variation de cap sélectionnée par le moyen 13 ; et
- un moyen 17, par exemple un moyen de commutation, qui est commandé par le moyen 8, comme représenté par une liaison 18 en traits mixtes sur la figure 1, et qui a pour but de transmettre des ordres de montée et de cap en fonction de cette commande.

Plus précisément, ledit moyen 17 est relié par des liaisons 19 et 20 respectivement auxdits moyens 7 et 15 et il transmet par l'intermédiaire d'une liaison 21 un ordre de montée et un ordre de cap, qui sont tels qu'ils correspondent :
- si ledit gain de hauteur ΔHO est suffisant pour franchir ledit relief 4, audit ordre de montée à pente optimale déterminé par ledit moyen 7, avec un ordre de maintien du cap courant de l'aéronef A ; et
- si ledit gain de hauteur ΔHO est insuffisant pour franchir ledit relief 4, aux ordres déterminés par ledit moyen 15, à savoir ledit ordre de montée particulier qui est suffisant pour franchir le relief 4, et ledit ordre de cap qui correspond à la valeur de variation de cap sélectionnée par ledit moyen 13.

Dans le cadre de la présente invention, l'ordre de montée à pente optimale est déterminé en tenant compte d'un ordre de poussée associé de façon à pouvoir maximiser la pente. La pente maximale correspondant à la poussée courante de l'aéronef A n'étant pas forcément la plus élevée, le système 1 détermine un ordre de poussée pour lequel la pente maximale est la plus élevée possible.

En outre, dans le cadre de la présente invention, un gain de hauteur correspond à la différence entre l'altitude obtenue au niveau du relief 4 et l'altitude actuelle de l'aéronef A.

De plus, un ordre de montée à pente optimale peut être défini comme suit : dans un premier temps, on fait monter l'aéronef A à angle d'incidence maximal, puis on le fait monter à pente maximale. De préférence, la durée de ce premier temps est choisie de façon à maximiser la hauteur franchissable au niveau du relief 4.

Bien entendu, ledit système d'évitement de terrain 1 comporte également des moyens 22 (qui peuvent par exemple être intégrés, au moins en partie, dans le dispositif de pilotage automatique 5) qui appliquent de façon usuelle audit aéronef A l'ordre de montée et l'ordre de cap reçus par l'intermédiaire de ladite liaison 21. Pour ce faire, lesdits moyens 22 de type usuel comportent, par exemple, un moyen de calcul pour déterminer des ordres de braquage de gouverne, à partir desdits ordres de montée et de cap, et au moins un moyen d'actionnement d'au moins une gouverne qui reçoit cet ordre de braquage de gouverne et déplace ladite gouverne en correspondance de manière à appliquer à l'aéronef A lesdits ordres de montée et de cap.

Dans un mode de réalisation particulier, ledit dispositif de pilotage automatique 5 fait partie d'un pilote automatique usuel de l'aéronef A.

En outre, dans un mode de réalisation préféré, ledit système d'évitement de terrain 1 comporte, de plus, un moyen d'indication 23 qui est, par exemple, relié par une liaison 24 audit dispositif de pilotage automatique 5 et qui a pour but de prévenir un pilote de l'aéronef A, lorsqu'un ordre de variation de cap déterminé par le moyen 15 est appliqué à ce dernier. Cette information peut par exemple être formée de manière visuelle à l'aide d'un écran de visualisation 25 qui est monté dans le poste de pilotage de l'aéronef A et/ou de manière sonore à l'aide d'un moyen usuel non représenté.

Dans l'exemple de la figure 2, le gain de hauteur ΔH0 qui est obtenu au niveau du relief 4, qui se trouve à l'avant de l'aéronef A suivant son cap courant (ligne 10), est suffisant pour franchir la crête 4A correspondante dudit relief 4. Dans cet exemple, le moyen 17 transmet aux moyens 22 les ordres issus dudit moyen 7, à savoir un ordre de montée à pente optimale et un ordre de maintien du cap courant de l'aéronef A. Dans ce cas, l'évitement du terrain 2 est donc réalisé de façon simplifiée, en mettant simplement en oeuvre une montée de l'aéronef A sans modifier sa trajectoire latérale (maintien du cap courant).

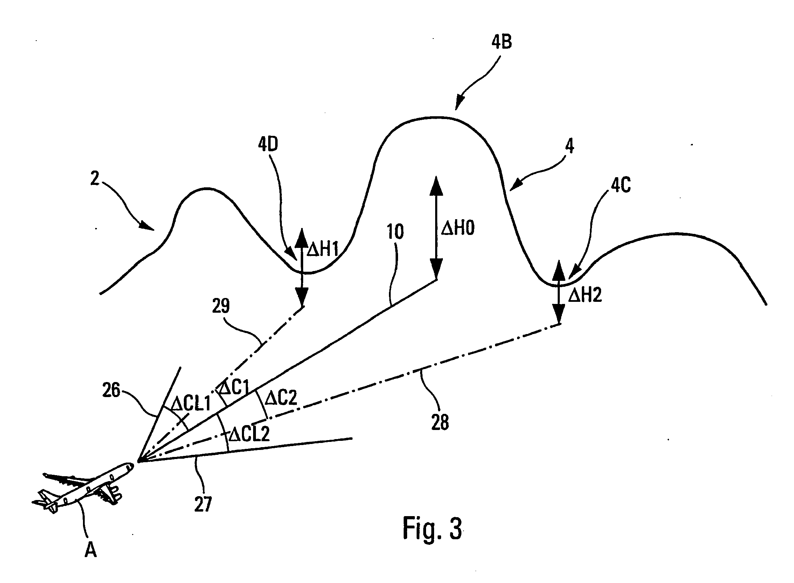

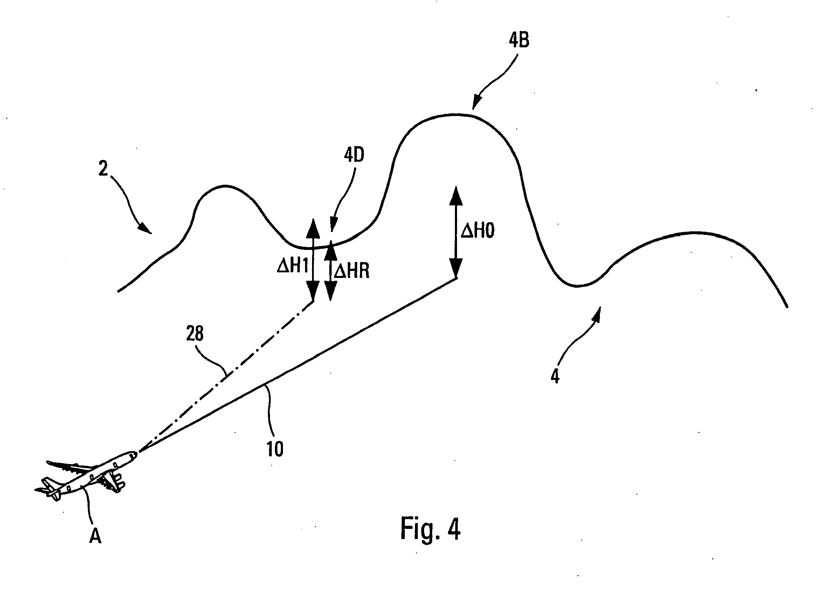

En revanche, dans les exemples des figures 3 et 4, le gain de hauteur ΔHO obtenu au niveau du relief par l'application à l'aéronef A d'un ordre de montée à pente optimale avec maintien du cap (ligne 10), est insuffisant pour franchir la crête 4B correspondante dudit relief 4. Dans ce cas, le moyen 17 transmet aux moyens 22 l'ordre de montée et l'ordre de cap qui sont déterminés par le moyen 15.

Comme indiqué précédemment, l'ordre de cap qui est engendré par le moyen 15 a pour but de modifier le cap de l'aéronef A conformément à la valeur de variation de cap sélectionnée par le moyen 13, parmi la pluralité de valeurs de variation de cap ΔCi possibles trouvées par le moyen 11.

Dans un mode de réalisation préféré, ledit moyen 13 sélectionne (parmi toutes les valeurs de variation de cap ΔCi trouvées) la valeur de variation de cap la plus petite en valeur absolue, ce qui permet d'écarter l'aéronef A le moins possible de son cap courant (ligne 10), c'est-à-dire de la trajectoire latérale initialement prévue. Dans l'exemple de la figure 3, le moyen 11 a trouvé deux valeurs de variations de cap ΔC1 et ΔC2. Conformément à ce mode de réalisation préféré, le moyen 13 sélectionne dans cet exemple la variation de cap ΔC1 qui présente la plus petite valeur absolue.

Bien entendu, dans le cadre de la présente invention, on peut envisager d'autres variantes de sélection de la valeur de variation de cap, mises en oeuvre par ledit moyen 13. En particulier :
- dans une première variante, ledit moyen 13 sélectionne la valeur de variation de cap qui correspond au relief le moins élevé et qui est située dans un intervalle de variation de cap prédéterminé (ΔCL1 + ΔCL2 sur la figure 3) qui est défini de part et d'autre du cap courant (ligne 10) de l'aéronef A et qui est limité par des segments 26 et 27. Dans l'exemple de la figure 3, la partie 4C du relief 4 qui se trouve dans la direction 28 définie par la variation de cap ΔC2 est moins élevée que la partie 4D du relief 4 qui se trouve dans la direction 29 définie par la variation de cap ΔC1 de sorte que le moyen 13 sélectionne la variation de cap ΔC2 dans cette première variante ;
- dans une seconde variante, ledit moyen 13 sélectionne la valeur de variation de cap, pour laquelle l'angle de roulis nécessaire au changement de cap correspondant est, en valeur absolue, inférieur à une valeur prédéterminée, par exemple à 45°, afin de ne pas trop dégrader les performances de montée de l'aéronef A.

Par ailleurs, ledit moyen 15 détermine également un ordre de montée particulier qui est associé audit ordre de variation de cap déterminé de la manière décrite précédemment.

Dans un premier mode de réalisation simplifié, ledit ordre de montée particulier déterminé par le moyen 15 correspond simplement à un ordre de montée à pente optimale. Bien entendu, pour un même ordre de montée à pente optimale, à distance sensiblement égale du relief 4, le gain de hauteur ΔH2 et ΔH1 1 obtenu pour une variation de cap est inférieur au gain de hauteur ΔH0 obtenu sans variation de cap, en raison de l'énergie dépensée par l'aéronef A pour réaliser la variation de cap (figure 3).

Dans un second mode de réalisation, ledit moyen 15 détermine, comme ordre de montée particulier, un ordre de montée (à pente non maximale) qui engendre un gain de hauteur ΔHR au niveau du relief 4, qui correspond à un gain de hauteur à la fois nécessaire pour franchir la partie 4D correspondante du relief 4, mais également suffisant compte tenu de marges de sécurité usuelles réglementaires et inférieur audit gain de hauteur ΔH1 relatif à une montée à pente maximale, comme représenté sur la figure 4. Dans ce second mode de réalisation, de préférence, on commence par déterminer une valeur de cap (ou de route) permettant de minimiser l'écart de route de l'aéronef A, puis on détermine un ordre de montée (à pente non maximale) permettant de franchir le relief 4 tout en minimisant l'écart de pente (confort des passagers).

Ce second mode de réalisation permet donc d'améliorer le confort des passagers (en raison d'une pente moindre et d'une accélération moindre) sans pour autant être préjudiciable à la sécurité de l'aéronef A, puisque le gain de hauteur ΔHR correspondant est suffisant pour franchir le relief 4 (partie 4D). Bien entendu, ce second mode de réalisation s'applique uniquement au cas où le gain de hauteur nécessaire pour franchir le relief est inférieur au gain de hauteur ΔH1 obtenu en appliquant à l'aéronef A un ordre de montée à pente optimale.

Par ailleurs, dans un mode de réalisation particulier, ledit dispositif de pilotage automatique 5 (ou lesdits moyens 22) applique à l'aéronef A d'abord ledit ordre de montée particulier, puis ledit ordre de cap engendrant un changement de cap. Ceci permet d'anticiper le plus possible l'ordre de montée et donc de maximiser le gain de hauteur obtenu au niveau du relief 4.

En outre, dans un mode de réalisation particulier, lorsque ledit dispositif d'alerte de collision 3 émet un signal d'alerte, le système 1 modifie la configuration aérodynamique de l'aéronef A de manière à augmenter le gain de hauteur au niveau du relief 4, et le moyen 7 détermine un ordre de montée à pente optimale, en tenant compte de la nouvelle configuration aérodynamique de l'aéronef A (résultant de cette modification). Ce mode de réalisation particulier permet d'augmenter le gain de hauteur obtenu au niveau du relief 4. Ce mode de réalisation peut notamment être appliqué sur un avion lors d'une approche d'un aéroport, pour laquelle les trains d'atterrissage, les becs, les volets et/ou les spoilers de l'avion sont sortis. Dans ce cas, la modification de la configuration aérodynamique consiste parfois simplement à rentrer ces différents éléments (trains d'atterrissage, becs, volets, spoilers) pour obtenir une pente de montée plus élevée. Toutefois, dans certaines situations, il est plus intéressant de laisser certains éléments au moins partiellement sortis (notamment des becs ou volets). En fait, on modifie la configuration aérodynamique de l'aéronef A de façon à optimiser les performances de montée dudit aéronef A. La modification de la configuration aérodynamique peut être réalisée soit automatiquement, soit par le pilote (par procédure).

Le système d'évitement de terrain 1 conforme à l'invention présente l'avantage d'agir sur la trajectoire de l'aéronef A, dès qu'un risque de collision avec le relief 4 du terrain 2 a été détecté, et cette action est réalisée automatiquement, c'est-à-dire sans intervention du pilote. Ainsi, dès l'émission d'un signal d'alerte par le dispositif d'alerte de collision 3, ledit système 1 agit de façon à améliorer la situation de l'aéronef A par rapport au terrain 2, en lui appliquant un ordre de montée, généralement un ordre de montée à pente optimale (relativement aux performances de l'aéronef A).

Pour ce faire, selon l'invention :
- si une telle action est suffisante pour franchir le relief 4, le système 1 applique simplement un ordre de montée à pente optimale à l'aéronef A sans modifier son cap, ce qui permet de réaliser une manoeuvre d'évitement simplifiée (figure 2) ; et
- si la manoeuvre simplifiée précédente n'est pas suffisante pour franchir le relief 4, ce qui peut survenir dans certaines circonstances (relief 4 très élevé, ...), le système 1 modifie le cap de l'aéronef A pour le diriger dans une direction où ledit relief 4 n'est pas trop élevé, et il lui applique alors un ordre de montée particulier qui est au moins suffisant pour franchir le relief 4 dans cette direction (figures 3 et 4).
   Par conséquent, le système 1 conforme à l'invention permet en principe à l'aéronef A de franchir tout relief 4 qui est situé devant lui.

On notera que, lors de la sortie d'un conflit (disparition d'un signal d'alerte), ledit système 1 ramène de préférence l'aéronef A dans une enveloppe de vol opérationnelle.

En outre, ledit système 1 comporte, de plus, un moyen (non représenté) permettant à un pilote de le désengager. Dans ce cas, ledit système 1 peut indiquer au pilote comment effectuer les variations de hauteur et de cap nécessaires pour éviter le relief 4 (par exemple au moyen d'un directeur de vol usuel qui indiquerait l'assiette et le cap à prendre).

## Revendications

1. Procédé d'évitement de terrain pour un aéronef (A), procédé selon lequel on utilise un dispositif d'alerte de collision (3) qui surveille le vol de l'aéronef (A) par rapport au terrain (2) environnant et qui est susceptible d'émettre un signal d'alerte, lorsque l'aéronef (A) risque une collision avec un relief (4) du terrain (2) en maintenant ses caractéristiques de vol actuelles, procédé selon lequel, lorsque ledit dispositif d'alerte de collision (3) émet un signal d'alerte, automatiquement :
B/ on vérifie si un premier gain de hauteur (ΔH0) qui est obtenu au niveau dudit relief (4) par l'aéronef (A), en lui appliquant un ordre de montée avec un ordre de maintien du cap courant, est suffisant pour franchir ledit relief (4) ; et
C/ en fonction de cette vérification, si ledit premier gain de hauteur (ΔH0) est insuffisant pour franchir ledit relief (4), on recherche s'il existe au moins une valeur de variation de cap (ΔC1, ΔC2), pour laquelle un second gain de hauteur (ΔH1, ΔH2) qui est obtenu au niveau du relief (4) par l'aéronef (A) en lui appliquant un ordre de montée est suffisant pour franchir ledit relief (4),
**caractérisé en ce que** :
- à une étape A/ antérieure, on détermine, comme ordre de montée, un ordre de montée à pente optimale pour l'aéronef (A), qui est utilisé aux étapes B/ et C ; et
- à l'étape C/ :
a) si ledit premier gain de hauteur (ΔH0) est suffisant pour franchir ledit relief (4), on applique automatiquement à l'aéronef ledit ordre de montée à pente optimale avec un ordre de maintien du cap courant ; et
b) si ledit premier gain de hauteur (ΔH0) est insuffisant pour franchir ledit relief (4), et s'il existe de plus au moins une valeur de variation de cap (ΔC1, ΔC2), pour laquelle un second gain de hauteur (ΔH1, ΔH2) qui est obtenu au niveau du relief (4) par l'aéronef (A) en lui appliquant un ordre de montée à pente optimale, est suffisant pour franchir ledit relief (4) :
α) on sélectionne automatiquement l'une desdites valeurs de variation de cap (ΔC1, ΔC2) permettant de franchir le relief (4) ; et
β) on applique automatiquement à l'aéronef (A) un ordre de montée particulier qui est suffisant pour franchir le relief (4), avec un ordre de cap qui correspond à la valeur de variation dé cap ainsi sélectionnée.

2. Procédé selon la revendication 1,
**caractérisé en ce que** ledit ordre de montée particulier que l'on applique à l'aéronef (A) à l'étape C.b.β correspond à un ordre de montée à pente optimale.

3. Procédé selon la revendication 1,
**caractérisé en ce que** l'on détermine, comme ordre de montée particulier que l'on applique à l'aéronef à l'étape C.b.β, un ordre de montée engendrant un gain de hauteur (ΔHR) au niveau du relief qui correspond à un gain de hauteur nécessaire et suffisant pour franchir ledit relief (4).

4. Procédé selon l'une quelconque des revendications 1 à 3,
**caractérisé en ce qu'**à l'étape C.b.α, on sélectionne la valeur de variation de cap (ΔC1) la plus petite en valeur absolue.

5. Procédé selon l'une quelconque des revendications 1 à 3,
**caractérisé en ce qu'**à l'étape C.b.α, on sélectionne la valeur de variation de cap (ΔC2) qui correspond au relief (4C) le moins élevé et qui est située dans un intervalle de variation de cap prédéterminé, défini de part et d'autre du cap courant (10) de l'aéronef (A).

6. Procédé selon l'une quelconque des revendications 1 à 3,
**caractérisé en ce qu'**à l'étape C.b.α, on sélectionne la valeur de variation de cap, pour laquelle l'angle de roulis nécessaire au changement de cap correspondant est, en valeur absolue, inférieur à une valeur prédéterminée.

7. Procédé selon l'une quelconque des revendications précédentes,
**caractérisé en ce qu'**à l'étape C.b.β, on applique d'abord ledit ordre de montée particulier, puis on applique ledit ordre de cap engendrant une variation de cap.

8. Procédé selon l'une quelconque des revendications précédentes,
**caractérisé en ce que**, lorsque ledit dispositif d'alerte de collision (3) émet un signal d'alerte, on modifie la configuration aérodynamique de l'aéronef (A) de manière à augmenter le gain de hauteur au niveau du relief (4), et on détermine, à l'étape A, un ordre de montée à pente optimale, en tenant compte de la nouvelle configuration aérodynamique de l'aéronef (A).

9. Procédé selon l'une quelconque des revendications précédentes,
**caractérisé en ce que**, lorsque l'on applique à l'étape C.b.β un ordre de cap engendrant une variation de cap, on émet dans le poste de pilotage de l'aéronef (A) un signal d'indication pour signaler à un pilote l'application de cet ordre de cap.

10. Procédé selon l'une quelconque des revendications précédentes,
**caractérisé en ce que**, lors de la disparition d'un risque de collision, on ramène l'aéronef (A) dans une enveloppe de vol opérationnelle.

11. Système d'évitement de terrain pour un aéronef (A), ledit système (1) comportant :
- un dispositif d'alerte de collision (3) qui surveille le vol de l'aéronef (A) par rapport au terrain (2) environnant et qui est susceptible d'émettre un signal d'alerte lorsque l'aéronef (A) risque une collision avec un relief (4) du terrain (2) s'il maintient ses caractéristiques de vol actuelles ; et
- un dispositif de pilotage automatique (5) de l'aéronef (A), comprenant au moins :
• un moyen (12) pour vérifier si un premier gain de hauteur (ΔHO) qui est obtenu au niveau dudit relief (4) par l'aéronef (A), en lui appliquant un ordre de montée avec un maintien du cap courant, est suffisant pour franchir ledit relief (4) ; et
• un moyen (11) pour rechercher, lorsque ledit premier gain de hauteur (ΔH0) est insuffisant pour franchir le relief (4), s'il existe au moins une valeur de variation de cap (ΔC1, ΔC2), pour laquelle un second gain de hauteur (ΔH1, ΔH2) qui est obtenu au niveau du relief par l'aéronef (A) en lui appliquant un ordre de montée, est suffisant pour franchir ledit relief (4),
**caractérisé en ce que** ledit dispositif de pilotage automatique (5) comprend de plus :
- un moyen (7) pour déterminer, comme ordre de montée, un ordre de montée à pente optimale pour l'aéronef (A) ;
- un moyen (13) pour sélectionner automatiquement, le cas échéant, l'une desdites valeurs de variation de cap (ΔC1, ΔC2) permettant de franchir le relief (4) ; et
- un moyen (17, 22) pour appliquer automatiquement à l'aéronef (A) un ordre de montée et un ordre de cap, à savoir :
• si ledit premier gain de hauteur (ΔH0) est suffisant pour franchir ledit relief (4), ledit ordre de montée à pente optimale avec un ordre de maintien du cap courant ; et
• si ledit premier gain de hauteur (ΔH0) est insuffisant pour franchir ledit relief (4), un ordre de montée particulier qui est suffisant pour franchir le relief (4), avec un ordre de cap qui correspond à la valeur de variation de cap sélectionnée.

12. Système selon la revendication 11,
**caractérisé en ce qu'**il comporte, de plus, un moyen d'indication (23) signalant automatiquement l'application d'un ordre de cap engendrant une variation de cap.

13. Système selon l'une des revendications 11 et 12,
**caractérisé en ce qu'**il comporte, de plus, un moyen pour optimiser la configuration aérodynamique.

14. Système selon l'une quelconque des revendications 11 à 13,
**caractérisé en ce qu'**il comporte, de plus, un moyen permettant à un pilote de le désengager.

15. Système selon l'une quelconque des revendications 11 à 14,
**caractérisé en ce que** ledit dispositif de pilotage automatique (5) fait partie d'un pilote automatique de l'aéronef (A).

16. Aéronef,
**caractérisé en ce qu'**il comporte un système (1) tel que celui spécifié sous l'une quelconque des revendications 11 à 15.

17. Aéronef,
**caractérisé en ce qu'**il comporte un système (1) susceptible de mettre en oeuvre le procédé spécifié sous l'une quelconque des revendications 1 à 10.

## Claims

1. A terrain avoidance method for an aircraft (A), a method according to which there is used a collision warning device (3) which monitors the flight of the aircraft (A) with respect to the surrounding terrain (2) and which is able to transmit a warning signal when there is a risk of a collision between the aircraft (A) and a relief (4) of the terrain (2) by maintaining its current flight characteristics, a method according to which, when said collision warning device (3) transmits a warning signal, automatically:
B/ it is checked if a first altitude gain (ΔH0) which is obtained at said relief (4) by the aircraft (A), by applying a climb command to it with a command to maintain the current heading, is sufficient to clear said relief (4); and
C/ according to this check, if said first altitude gain (ΔH0) is not sufficient to clear said relief (4), a search is carried out to see if there is at least one heading variation value (ΔC1, ΔC2) for which a second altitude gain (ΔH1, ΔH2) which is obtained at the relief (4) by the aircraft (A), on applying to it a climb command, is sufficient to clear said relief (4),
**characterized in that**:
- in a prior step A/, an optimal slope climb command for the aircraft (A) is determined, as a climb command, which is used in steps B/and C/; and
- in step C/:
a) if said first altitude gain (ΔH0) is sufficient to clear said relief (4), said optimal slope climb command is automatically applied to the aircraft with a command to maintain the current heading; and
b) if said first altitude gain (ΔH0) is not sufficient to clear said relief (4), and if there is furthermore at least one heading variation value (ΔC1, ΔC2) for which a second altitude gain (ΔH1, ΔH2) which is obtained at the relief (4) by the aircraft (A), on applying to it an optimal slope climb command, is sufficient to clear said relief (4):
α) one of said heading variation values (ΔC1, ΔC2) making it possible to clear the relief (4) is selected automatically; and
β) a particular climb command which is sufficient to clear the relief (4) is applied to the aircraft (A) automatically, with a heading command which corresponds to the heading variation value thus selected.

2. The method as claimed in claim 1, **characterized in that** said particular climb command that is applied to the aircraft (A), in step C.b.β, corresponds to an optimal slope climb command.

3. The method as claimed in claim 1, **characterized in that** there is determined, as a particular climb command that is applied to the aircraft in step C.b.β, a climb command generating an altitude gain (ΔHR) at the relief which corresponds to an altitude gain that is necessary and sufficient to clear said relief (4).

4. The method as claimed in any one of claims 1 to 3, **characterized in that**, in step C.b.α, the heading variation value (ΔC1) which is smallest in absolute value is selected.

5. The method as claimed in any one of claims 1 to 3, **characterized in that**, in step C.b.α, there is selected the heading variation value (ΔC2) which corresponds to the lowest relief (4C) and which is situated within a predetermined heading variation range, defined on either side of the current heading (10) of the aircraft (A).

6. The method as claimed in any one of claims 1 to 3, **characterized in that**, in step C.b.α, there is selected the heading variation value for which the roll angle necessary for the corresponding change of heading is, in absolute value, less than a predetermined value.

7. The method as claimed in any one of the preceding claims, **characterized in that**, in step C.b.β, there is firstly applied said particular climb command, then there is applied said heading command generating a heading variation.

8. The method as claimed in any one of the preceding claims, **characterized in that**, when said collision warning device (3) transmits a warning signal, the aerodynamic configuration of the aircraft (A) is modified in such a way as to increase the altitude gain at the relief (4), and there is determined, in step A, an optimal slope climb command, taking account of the new aerodynamic configuration of the aircraft (A).

9. The method as claimed in any one of the preceding claims, **characterized in that** when, in step C.b.β, there is applied a heading command generating a heading variation, there is transmitted in the cockpit of the aircraft (A) an indicating signal to inform a pilot of the application of that heading command.

10. The method as claimed in any one of the preceding claims, **characterized in that**, when a risk of collision disappears, the aircraft (A) is returned into an operational flight envelope.

11. A terrain avoidance system for an aircraft (A), said system (1) comprising:
- a collision warning device (3) which monitors the flight of the aircraft (A) with respect to the surrounding terrain (2) and which is able to transmit a warning signal when there is a risk of collision between the aircraft (A) and a relief (4) of the terrain (2) if it maintains its current flight characteristics; and
- an automatic piloting device (5) of the aircraft (A), comprising at least:
• a means (12) for checking if a first altitude gain (ΔH0) which is obtained by the aircraft (A) at said relief (4), on applying to it a climb command whilst maintaining the current heading, is sufficient to clear said relief (4);
• a means (11) to find out, when said first altitude gain (ΔH0) is not sufficient to clear said relief (4), if there is at least one heading variation value (ΔC1, ΔC2) for which a second altitude gain (ΔH1, ΔH2) which is obtained at the relief by the aircraft (A), on applying to it a climb command, is sufficient to clear said relief (4),
**characterized in that** said automatic piloting device (5) furthermore comprises:
- a means (7) of determining an optimal slope climb command for the aircraft (A) as a climb command;
- a means (13) for automatically selecting, if necessary, one of said heading variation values (ΔC1, ΔC2) making it possible to clear the relief (4); and
- a means (17, 22) for automatically applying to the aircraft (A) a climb command and a heading command, namely:
• if said first altitude gain (ΔH0) is sufficient to clear said relief (4), said optimal slope climb command with a command to maintain the current heading; and
• if said altitude gain (ΔHO) is not sufficient to clear said relief (4), a particular climb command which is sufficient to clear the relief (4), with a heading command which corresponds to the selected heading variation value.

12. The system as claimed in claim 11, **characterized in that** it furthermore comprises a means (23) of automatically signaling the application of a heading command generating a heading variation.

13. The system as claimed in one of claims 11 and 12, **characterized in that** it furthermore comprises a means of optimizing the aerodynamic configuration.

14. The system as claimed in any one of claims 11 to 13, **characterized in that** it furthermore comprises a means making it possible for the pilot to disengage it.

15. The system as claimed in any one of claims 11 to 14, **characterized in that** said automatic piloting device (5) is part of an automatic pilot of the aircraft (A).

16. An aircraft, **characterized in that** it comprises a system (1) such as claimed in any one of claims 11 to 15.

17. An aircraft, **characterized in that** it comprises a system (1) capable of implementing the method claimed in any one of claims 1 to 10.

## Patentansprüche

1. Geländeausweichverfahren für ein Luftfahrzeug (A), wobei eine Kollisionswarnvorrichtung (3) verwendet wird, die den Flug des Luftfahrzeugs (A) im Verhältnis zum umliegenden Gelände (2) überwacht und die in der Lage ist, ein Warnsignal abzugeben, wenn für das Luftfahrzeug (A) das Risiko einer Kollision mit einer Erhöhung (4) des Geländes (2) besteht, wenn es seine derzeitigen Flugeigenschaften beibehält, wobei, wenn die Kollisionswarnvorrichtung (3) ein Warnsignal abgibt, automatisch folgendes erfolgt:
B) es wird überprüft, ob ein erster Höhengewinn (ΔH0), der durch das Luftfahrzeug (A) an der Erhöhung (4) erzielt wird, indem ihm ein Steigflugbefehl mit einem Befehl, den aktuellen Kurs zu halten, erteilt wird, ausreicht, um die Erhöhung (4) zu überfliegen; und
C) je nach dieser Überprüfung, wenn der erste Höhengewinn (ΔH0) nicht ausreicht, um die Erhöhung (4) zu überfliegen, wird gesucht, ob es mindestens einen Kursänderungswert (ΔC1, ΔC2) gibt, für den ein zweiter Höhengewinn (ΔH1, ΔH2), durch das Luftfahrzeug (A) der an der Erhöhung (4) erzielt wird, indem ihm ein Steigflugbefehl erteilt wird, ausreicht um die Erhöhung (4) zu überfliegen,
**dadurch gekennzeichnet, dass**:
- in einem vorherigen Schritt A) als Steigflugbefehl für das Luftfahrzeug (A) ein Steigflugbefehl mit optimaler Neigung bestimmt wird, der in den Schritten B) und C) verwendet wird; und
- in Schritt C):
a) wenn der erste Höhengewinn (ΔH0) ausreicht, um die Erhöhung (4) zu überfliegen, dem Luftfahrzeug automatisch der Steigflugbefehl mit optimaler Neigung mit einem Befehl zum Einhalten des aktuellen Kurses erteilt wird; und
b) wenn der erste Höhengewinn (ΔH0) nicht ausreicht, um die Erhöhung (4) zu überfliegen, und wenn es zudem mindestens einen Kursänderungswert (ΔC1, ΔC2) gibt, für den ein zweiter Höhengewinn (ΔH1, ΔH2), der durch das Luftfahrzeug (A) an der Erhöhung (4) erzielt wird, indem ihm ein Steigflugbefehl mit optimaler Neigung erteilt wird, ausreicht, um die Erhöhung (4) zu überfliegen:
α) automatisch einer der Kursänderungswerte (ΔC1, ΔC2), der es ermöglicht, die Erhöhung (4) zu überfliegen, gewählt wird; und
β) dem Luftfahrzeug (A) automatisch ein spezifischer Steigflugbefehl, der ausreicht um die Erhöhung (4) zu überfliegen, mit einem Kursbefehl, der dem somit gewählten Kursänderungsbefehl entspricht, erteilt wird.

2. Verfahren nach Anspruch 1, **dadurch gekennzeichnet, dass** der spezifische Steigflugbefehl, der dem Luftfahrzeug (A) in Schritt C.b.β erteilt wird, einem Steigflugbefehl mit optimaler Neigung entspricht.

3. Verfahren nach Anspruch 1, **dadurch gekennzeichnet, dass** als spezifischer Steigflugbefehl, der dem Luftfahrzeug in Schritt C.b.β erteilt wird, ein Steigflugbefehl, der einen Höhengewinn (ΔHR) an der Erhöhung erzeugt, der einem Höhengewinn entspricht, der notwendig und ausreichend ist, um die Erhöhung (4) zu überfliegen, bestimmt wird.

4. Verfahren nach einem der Ansprüche 1 bis 3, **dadurch gekennzeichnet, dass** in Schritt C.b.α der Kursänderungswert (ΔC1) mit dem kleinsten absoluten Wert gewählt wird.

5. Verfahren nach einem der Ansprüche 1 bis 3, **dadurch gekennzeichnet, dass** in Schritt C.b.α der Kursänderungswert (ΔC2) gewählt wird, welcher der niedrigsten Erhöhung (4C) entspricht und der sich in einem vorherbestimmten Kursänderungsintervall befindet, das auf beiden Seiten des aktuellen Kurses (10) des Luftfahrzeugs (A) definiert wird.

6. Verfahren nach einem der Ansprüche 1 bis 3, **dadurch gekennzeichnet, dass** in Schritt C.b.α der Kursänderungswert gewählt wird, für den der Rollwinkel, der zur entsprechenden Kursänderung notwendig ist, als absoluter Wert kleiner ist als ein vorherbestimmter Wert.

7. Verfahren nach einem der vorhergehenden Ansprüche, **dadurch gekennzeichnet, dass** in Schritt C.b.β zunächst der spezifische Steigflugbefehl und dann der Kursbefehl, der eine Kursänderung erzeugt, angewendet wird.

8. Verfahren nach einem der vorhergehenden Ansprüche, **dadurch gekennzeichnet, dass** wenn die Kollisionswarnvorrichtung (3) ein Warnsignal abgibt, die aerodynamische Konfiguration des Luftfahrzeugs (A) geändert wird, um den Höhengewinn an der Erhöhung (4) zu steigern, und in Schritt A ein Steigflugbefehl mit optimaler Neigung bestimmt wird, wobei die neue aerodynamische Konfiguration des Luftfahrzeugs (A) berücksichtigt wird.

9. Verfahren nach einem der vorhergehenden Ansprüche, **dadurch gekennzeichnet, dass** wenn in Schritt C.b.β ein Kursbefehl, der eine Kursänderung erzeugt, erteilt wird, im Cockpit des Luftfahrzeugs (A) ein Meldesignal abgegeben wird, um einem Piloten die Erteilung dieses Kursbefehls zu melden.

10. Verfahren nach einem der vorhergehenden Ansprüche, **dadurch gekennzeichnet, dass** wenn ein Kollisionsrisiko beseitigt ist, das Luftfahrzeug (A) in einen betriebsmäßigen Flugbereich zurückgebracht wird.

11. Geländeausweichsystem für ein Luftfahrzeug (A), wobei das System (1) folgendes umfasst:
- eine Kollisionswarnvorrichtung (3), die den Flug des Luftfahrzeugs (A) im Verhältnis zum umliegenden Gelände (2) überwacht und die in der Lage ist, ein Warnsignal abzugeben, wenn für das Luftfahrzeug (A) das Risiko einer Kollision mit einer Erhöhung (4) des Geländes (2) besteht, wenn es seine derzeitigen Flugeigenschaften beibehält; und
- ein Selbststeuervorrichtung (5) des Luftfahrzeugs (A), die mindestens folgendes umfasst:
• ein Mittel (12), um zu überprüfen, ob ein erster Höhengewinn (ΔH0), der durch das Luftfahrzeug (A) an der Erhöhung (4) erzielt wird, indem ihm ein Steigflugbefehl mit einer Einhaltung des aktuellen Kurses erteilt wird, ausreicht um die Erhöhung (4) zu überfliegen; und
• ein Mittel (11) zum Suchen, wenn der erste Höhengewinn (ΔH0) nicht ausreicht, um die Erhöhung (4) zu überfliegen, ob es mindestens einen Kursänderungswert (ΔC1, ΔC2) gibt, für den ein zweiter Höhengewinn (ΔH1, ΔH2), der an der Erhöhung durch das Luftfahrzeug (A) erzielt wird, indem ihm ein Steigflugbefehl erteilt wird, ausreicht, um die Erhöhung (4) zu überfliegen,
**dadurch gekennzeichnet, dass** die Selbststeuervorrichtung (5) ferner folgendes umfasst:
- ein Mittel (7), um als Steigflugbefehl einen Steigflugbefehl mit optimaler Neigung für das Luftfahrzeug (A) zu bestimmen;
- ein Mittel (13), um gegebenenfalls automatisch einen der Kursänderungswerte (ΔC1, ΔC2) auszuwählen, der es ermöglicht, die Erhöhung (4) zu überfliegen; und
- ein Mittel (17, 22), um dem Luftfahrzeug (A) automatisch einen Steigflugbefehl und einen Kursbefehl zu erteilen, nämlich:
• wenn der erste Höhengewinn (ΔH0) ausreicht, um die Erhöhung (4) zu überfliegen, den Steigflugbefehl mit optimaler Neigung mit einem Befehl zum Einhalten des aktuellen Kurses; und
• wenn der erste Höhengewinn (ΔH0) nicht ausreicht, um die Erhöhung (4) zu überfliegen, einen spezifischen Steigflugbefehl, der ausreicht, um die Erhöhung (4) zu überfliegen, mit einem Kursbefehl, der dem gewählten Kursänderungswert entspricht.

12. System nach Anspruch 11, **dadurch gekennzeichnet, dass** es zudem ein Meldemittel (23) umfasst, das automatisch die Erteilung eines Kursbefehls, der eine Kursänderung erzeugt, meldet.

13. System nach einem der Ansprüche 11 und 12, **dadurch gekennzeichnet, dass** es zudem ein Mittel zum Optimieren der aerodynamischen Konfiguration umfasst.

14. System nach einem der Ansprüche 11 bis 13, **dadurch gekennzeichnet, dass** es zudem ein Mittel umfasst, um es einem Piloten zu ermöglichen, das System auszukoppeln.

15. System nach einem der Ansprüche 11 bis 14, **dadurch gekennzeichnet, dass** die Selbststeuervorrichtung (5) Teil eines Autopiloten des Luftfahrzeugs (A) ist.

16. Luftfahrzeug, **dadurch gekennzeichnet, dass** es ein System (1) wie das in einem der Ansprüche 11 bis 15 angegebene System umfasst.

17. Luftfahrzeug, **dadurch gekennzeichnet, dass** es ein System (1) umfasst, das in der Lage ist, das Verfahren umzusetzen, das in einem der Ansprüche 1 bis 10 angegeben wird.
